# EUROPÄISCHE PATENTANMELDUNG

(11) **EP 3 231 939 A1**
(43) Veröffentlichungstag der Anmeldung: **18.10.2017**
(21) Anmeldenummer: 16164656.7
(22) Anmeldetag: 11.04.2016
(51) Int. Cl.: D21H 27/00, B32B 29/00, D21H 27/30, D21H 27/38

(54) **MEHRLAGIGES PAPIERTASCHENTUCH ZUR REDUZIERUNG DER ÜBERTRAGUNG VON KRANKHEITSERREGERN**

(71) Anmelder: Fuhrmann, Uwe, 95444 Bayreuth (DE); Eismann, Katrin, 95444 Bayreuth (DE)
(72) Erfinder: Labin, Marek, 95336 Mainleus (DE)
(74) Vertreter: Kalhammer, Georg

(57) **Zusammenfassung**

Die vorliegende Erfindung betrifft ein mehrlagiges Flächenprodukt, das teilweise aus Tissue-Papier besteht, mit mindestens einer feuchtigkeitsundurchlässigen Lage, sowie dessen Herstellung und Verwendung.

## Beschreibung

Die vorliegende Erfindung betrifft ein mehrlagiges Flächenprodukt, das teilweise aus Tissue-Papier besteht, mit mindestens einer feuchtigkeitsundurchlässigen Lage, sowie dessen Herstellung und Verwendung. Im Speziellen bezieht sich die Erfindung auf ein solches mehrlagiges Flächenprodukt, welches unter anderem in der Form eines Papiertaschentuches, eines Sanitärprodukts, eines Wischtuchs oder einer Serviette vorliegt und als saugfähiger aber feuchtigkeitsundurchlässiger Wegwerfartikel, die Flüssigkeit und darin enthaltene Krankheitserreger und Schadstoffe effizient auffängt und deren Ausbreitung auf die mit der Flüssigkeit direkt in Kontakt kommende Seite beschränkt.

### Hintergrund der Erfindung

Das Papiertuch als Hilfsmittel zum Aufwischen und Auffangen von Flüssigkeiten ist ein gängiges Element in allen Bereichen des Lebens. Insbesondere als Sanitäts- und Hygieneprodukt ist es heutzutage im Alltag unabdingbar.

Mehrlagige Flächenprodukte aus Tissue-Papier sind seit langem bekannt. Unter Tissue-Papier ist hierbei ein saugfähiges und weiches Papier mit niedrigem Flächengewicht aus Zellstoff und/oder Synthesefasern zu verstehen. Erfindungen auf dem Gebiet der mehrlagigen Flächenprodukte aus Tissue-Papier haben in den letzten Jahren unter anderem darauf abgezielt die Saugfähigkeit, Weichheit und Reißfestigkeit zu verbessern sowie die Herstellungsverfahren zu optimieren. Namentlich wurde in EP1036880A1 ein Tissue-Papier mit hoher Wasseraufnahmefähigkeit bei geringer Dicke sowie das Verfahren zu dessen Herstellung mit einfachen Mitteln entwickelt. WO9937860A1 beschreibt ein Tissueprodukt welches durch die Behandlung mit Amin-modifiziertem Polysiloxan eine besonders weiche Oberflächentextur erhält. Unter einem Tissueprodukt ist hierbei ein mehrlagiges Flächenprodukt aus Tissue-Papier zu verstehen. DE102005036075A1 beschreibt ein Verfahren zur Herstellung von besonders reißfestem und saugfähigem Tissue-Papier.

Mikroorganismen, und damit potenzielle Krankheitserreger finden sich in allen Exkretionen des Menschen und Tieres. Gerade im Falle einer bakteriellen oder viralen Erkrankung sind die verantwortlichen Krankheiterreger häufig in erhöhter Konzentration in den Exkreten des menschlichen und tierischen Körpers zu finden.

Zudem sind verschüttete Flüssigkeiten die potentiell Schadstoffe enthalten in verschiedensten Betätigungsfeldern ein alltägliches Problem.

Das Aufwischen solcher Exkrete und Flüssigkeiten mit herkömmlichem Tissue-Papier birgt die Gefahr der Kontamination. So wird das mit Flüssigkeit in Berührung kommende Tissue-Papier, wie zum Beispiel beim sich Schnäuzen oder beim Aufwischen von Exkreten oder anderen Flüssigkeiten, automatisch großflächig durchnässt. Dabei werden zum Einen die in der Flüssigkeit befindlichen Krankheitserreger oder Schadstoffe, durch die individuellen Lagen, auf die, der ursprünglich der Flüssigkeit ausgesetzten Fläche, gegenüberliegende Fläche getragen, zum anderen reduziert sich durch die Durchnässung die Reißfestigkeit des Tissue-Papiers. Dadurch wird jede Oberfläche, die mit dem durchnässten Bereich des Tissue-Papiers in Kontakt kommt, mit den in der Flüssigkeit enthaltenen Krankheitserregern oder Schadstoffen kontaminiert. Für den praktischen Gebrauch bedeutet dies, dass die Hand, die das Tissue-Papier hält, unweigerlich mit den Krankheitserregern oder Schadstoffen direkt in Berührung kommt.

In der Vergangenheit wurde schon verschiedentlich versucht diese Kontaminationsgefahr, zumindest im Bezug auf Krankheitserreger-enthaltende Flüssigkeiten, durch das Zugeben von antimikrobiellen Mitteln zu reduzieren. Unter einem antimikrobiellen Mittel ist dabei eine Substanz zu verstehen, die die krankheitserregenden Mikroorganismen abtötet oder unschädlich macht.

So offenbart GB1424692A ein trockenes Tissue-Papier, welches mit einer Zusammensetzung, die wenigstens zwei aktive Substanzen enthält, unter anderem ein Bakterizid, ein Fungizid oder ein Anthelminthikum enthält, behandelt worden ist. GB2103089A beschreibt eine Methode, eine Zusammensetzung und ein Produkt, wobei ein Substrat, wie ein Papiertaschentuch oder ein Vliessmaterial mit viruziden Carbonsäuren behandelt wird. WO9945771A1 offenbart ein Tissue-Papier das mit einer wasserfreien Hautlotions-Zusammensetzung behandelt worden ist, die mindestens ein antimikrobielles Mittel enthält. Hierbei soll die Hautlotion Hautirritationen, die beim Hautkontakt des mit antimikrobiellen Mitteln behandelten Tissue-Papiers, wie zum Beispiel oben beschriebenen, entstehen können, entgegen wirken.

Die wichtigsten Schwachpunkte eines solchen Ansatzes bleiben dabei aber unbeachtet. Ein mit antimikrobiellen Mitteln behandeltes Tissue-Papier hat die Kapazität eine gewisse Anzahl Krankheitserreger unschädlich zu machen. Diese Kapazität ist nicht nur durch die limitierte Menge an antimikrobiellen Mitteln die auf das Tissueprodukt geladen werden kann beschränkt, sondern nimmt auch unweigerlich ab je grösser das aufgenommene Flüssigkeitsvolumen ist. Die Effektivität gegenüber verschiedenen Arten von Krankheitserregern variiert zudem je nach antimikrobiellem Mittel. Für den Alltagsgebrauch bedeutet dies, dass es nicht nur kostenintensiv sondern beinahe unmöglich ist, ein hautverträgliches Tissue-Papier zu produzieren, welches antimikrobielle Mittel enthält, die die gesamte Bandbreite an Krankheitserregern, die im menschlichen und tierischen Umfeld gefunden werden können, mit genügender Effizienz unschädlich machen.

Darüber hinaus reduziert sich bei einem herkömmlichen Tissue-Papier durch die Aufnahme von Flüssigkeit die Reißfestigkeit. Dementsprechend besteht die Gefahr, dass, auch wenn die eingesetzten antimikrobiellen Mittel in gewissen Fällen eine ausreichende Barriere darstellen, ein Riss im Tissue-Papier zu unbeabsichtigtem Kontakt mit bestimmten Oberflächen oder Körperpartien (wie z.B. den Händen beim sich Schnäuzen) führen kann.

Aufgabe der vorliegenden Erfindung ist es ein mehrlagiges Flächenprodukt, das teilweise aus Tissue-Papier besteht, bereitzustellen, welches die oben genannten Nachteile von herkömmlichen mehrlagigen Flächenprodukten aus Tissue-Papier nicht aufweist. Diese Aufgabe wird mit den Merkmalen der Patentansprüche der vorliegenden Erfindung gelöst. Das Flächenprodukt besteht aus mindestens einer saugfähigen Lage mit hoher Wasseraufnahmekapazität aus Tissue-Papier sowie mindestens einer feuchtigkeitsundurchlässigen Lage. Dadurch können Flüssigkeiten effizient aufgefangen werden ohne das Risiko, dass Krankheitserreger und Schadstoffe auf die Außenseite der, der Flüssigkeit direkt ausgesetzten Außenlage, gegenüberliegenden Außenlage gelangen. Zudem erhöht sich durch die feuchtigkeitsundurchlässige Lage die Reißfestigkeit des mehrlagigen Flächenprodukts im durchnässten Zustand.

### Zusammenfassung der Erfindung

(1) Die vorliegende Erfindung betrifft ein mehrlagiges Flächenprodukt umfassend wenigstens zwei zumindest teilweise verbundene Lagen, mit wenigstens einer überwiegend aus Tissue-Papier bestehenden Lage und wenigstens einer feuchtigkeitsundurchlässigen Lage.
(2) Mehrlagiges Flächenprodukt gemäß Punkt 1, umfassend wenigstens drei zumindest teilweise verbundene Lagen, mit zwei überwiegend aus Tissue-Papier bestehenden Lagen als Außenlagen und wenigstens einer feuchtigkeitsundurchlässigen Lage als Zwischenlage.
(3) Mehrlagiges Flächenprodukt gemäß Punkt 1 oder 2, umfassend wenigstens vier zumindest teilweise verbundene Lagen, mit zwei überwiegend aus Tissue-Papier bestehenden Lagen als Außenlagen, wenigstens einer feuchtigkeitsundurchlässigen Lage als Zwischenlage sowie wenigstens einer überwiegend aus Tissue-Papier bestehenden Lage als Zwischenlage.
(4) Mehrlagiges Flächenprodukt nach einem der vorstehenden Punkte, dadurch gekennzeichnet, dass die einzelnen Lagen aus einem biologisch abbaubaren Material bestehen.
(5) Mehrlagiges Flächenprodukt nach einem der vorstehenden Punkte, bei dem es sich um ein Papiertaschentuch, ein Sanitärprodukt, ein Wischtuch, ein Gesichtstuch, ein Haushaltstuch, ein Handtuch, Bettwäsche, ein Kleidungstück, Seidenpapier oder eine Serviette handelt.
(6) Mehrlagiges Flächenprodukt nach Punkt 5, bei dem es sich um ein Papiertaschentuch, ein Toilettenpapier, ein Wischtuch, ein Gesichtstuch, ein Haushaltstuch oder eine Serviette, handelt.
(7) Mehrlagiges Flächenprodukt nach Punkt 5 oder 6, bei dem es sich um ein Papiertaschentuch handelt.
(8) Mehrlagiges Flächenprodukt nach einem der vorstehenden Punkte, dadurch gekennzeichnet, dass die feuchtigkeitsundurchlässige Lage eine biologisch abbaubare Folie ist, die ein oder mehrere biologisch abbaubare Polymere enthält, ausgewählt aus der Gruppe bestehend aus Polylactid sowie dessen Copolymeren, Chitosan, Casein, Polyhydroxyessigsäure, Polyesteramiden, Polyhydroxyalkanoaten, Poly-3-hydroxyvalerat, Poly-3-hydroxybutyrat-co-3-hydroxyvalerat Copolymeren, Poly-3-hydroxybutyrat-co-3-hydroxyhexanoat, Poly-3-hydroxybutyrat-co-3-hydroxyoctanoat, Poly-3-hydroxybutyrat-co-4-hydroybutyrat, Poly-3-hydroxybutyrat-co-3-hydroxydecanoat, Poly-3-hydroxybutyrat-co-3-hydroxyoctadecanoat, Polyhydroxybutyrat, Polyvinylbutyral, Polyalkylencarbonaten, Polycaprolacton, Polybutylensuccinat, Polybutylensuccinat-Adipat, Polyethylensuccinat, modifiziertem Polyethylenterephthalat, aliphatisch-aromatischen Polyester Copolymeren, Biokunststoffen auf der Grundlage von Lignin und Cellulose, und Kombinationen davon.
(9) Mehrlagiges Flächenprodukt nach Punkt 8, dadurch gekennzeichnet, dass die biologisch abbaubare Folie durch Spritzguss, Extrusion, Kalandrieren, Pressen, Tiefziehen oder Blasformen hergestellt wurde.
(10) Mehrlagiges Flächenprodukt nach Punkt 8 oder 9, dadurch gekennzeichnet, dass die biologisch abbaubare Folie bevorzugt durch Extrusion hergestellt wurde.
(11) Mehrlagiges Flächenprodukt nach einem der Punkte 1 bis 7, dadurch gekennzeichnet, dass die feuchtigkeitsundurchlässige Lage überwiegend aus Zellstoff besteht, welcher durch Zugabe von, oder Beschichtung mit, einem oder mehreren biologisch abbaubaren Polymeren feuchtigkeitsundurchlässig gemacht wurde.
(12) Mehrlagiges Flächenprodukt nach Punkt 11, bei dem eine feuchtigkeitsundurchlässige Lage mittels Laminieren, Extrusion oder Spritzguss beschichtet wurde.
(13) Mehrlagiges Flächenprodukt nach einem der Punkte 8 bis 12, bei dem die Folie, das zugegebene Material oder die Beschichtung vorzugsweise aus Polylactid, aliphatisch-aromatischen Polyester Copolymeren oder einer Kombination davon besteht.
(14) Mehrlagiges Flächenprodukt nach einem der vorstehenden Punkte, bei dem die überwiegend aus Tissue-Papier bestehenden Lagenüberwiegend aus Zellstoff bestehen.
(15) Mehrlagiges Flächenprodukt nach Punkt 14, dadurch gekennzeichnet, dass die überwiegend aus Tissue-Papier bestehenden Lagen 51 bis 100 Gew.-% Zellstofffasern und 0 bis 49 Gew-% Synthesefasern und/oder chemisch modifizierte Fasern enthalten.
(16) Mehrlagiges Flächenprodukt nach einem der vorstehenden Punkte, dadurch gekennzeichnet, dass das Flächengewicht der überwiegend aus Tissue-Papier bestehenden Lagen 5 bis 65 g/m², vorzugsweise 15 bis 30 g/m², beträgt.
(17) Mehrlagiges Flächenprodukt nach einem der Punkte 2 bis 16, dadurch gekennzeichnet, dass das Flächengewicht der Außenlagen 5 bis 65 g/m², vorzugsweise 15 bis 30 g/m², insbesondere 15 bis 25 g/m² beträgt.
(18) Mehrlagiges Flächenprodukt nach einem der Punkte 8 bis 13, wobei das Flächengewicht der feuchtigkeitsundurchlässigen Lage 5 bis 150 g/m², vorzugsweise 10 bis 50 g/m², beträgt.
(19) Mehrlagiges Flächenprodukt nach einem der Punkte 8, 9, 10 und 13, wobei die Lagendicke der feuchtigkeitsundurchlässigen Lage 10 bis 150 µm, vorzugsweise 10 bis 80 µm, beträgt.
(20) Mehrlagiges Flächenprodukt nach einem der vorstehenden Punkte, dadurch gekennzeichnet, dass es sich bei wenigstens einer der überwiegend aus Tissue-Papier bestehenden Lagen um eine Lage mit hoher Saugfähigkeit und Wasseraufnahmekapazität handelt.
(21) Mehrlagiges Flächenprodukt nach Punkt 20, wobei es sich bei wenigstens einer der Lagen mit hoher Saugfähigkeit und Wasseraufnahmekapazität um eine Außenlage handelt.
(22) Mehrlagiges Flächenprodukt nach Punkt 20 oder 21, wobei es sich bei wenigstens einer der Lagen mit hoher Saugfähigkeit und Wasseraufnahmekapazität um eine überwiegend aus Tissue-Papier bestehende Zwischenlage handelt.
(23) Mehrlagiges Flächenprodukt gemäß einem der Punkte 20 bis 22, bei dem die überwiegend aus Tissue-Papier hergestellten Lagen aus einer Stoffsuspension hergestellt werden die Fasern umfasst, welche einen Mahlgrad von 15 bis 22 °SR, vorzugsweise 15 bis 19 °SR, aufweisen.
(24) Mehrlagiges Flächenprodukt nach einem der Punkte 20 bis 23, bei dem die Wasseraufnahmekapazität durch zonales Pressen im Entwässerungsschritt gesteigert wird.
(25) Mehrlagiges Flächenprodukt nach einem der vorstehenden Punkte, dadurch gekennzeichnet, dass wenigstens eine der Außenlagen eine wenigstens auf einem Teil Ihrer Oberfläche aufgebrachte (Lagen-) Prägung aufweist.
(26) Mehrlagiges Flächenprodukt nach einem der vorstehenden Punkte, bei dem die Lagen durch Prägung und/oder Verleimung, vorzugsweise durch Kantenprägung und/oder Kantenverleimung, zusammengebracht sind.
(27) Mehrlagiges Flächenprodukt nach einem der vorstehenden Punkte, bei dem wenigstens eine der überwiegend aus Tissue-Papier bestehenden Lagen mit mindestens einem Mittel zur Veränderung der Tissue-Papiereigenschaften behandelt worden ist.
(28) Mehrlagiges Flächenprodukt gemäß Punkt 27, wobei das Mittel zur Veränderung der Tissue-Papiereigenschaften aus der Gruppe, umfassend Mittel zur Erhöhung der Absorptionsgeschwindigkeit, Mittel zur Verbesserung der Oberflächenweichheit, Mittel zur Erhöhung der Festigkeit, und kosmetische Stoffe, auszuwählen ist.
(29) Mehrlagiges Flächenprodukt nach einem der vorstehenden Punkte, bei dem mindestens eine der Außenlagen mit chemischen Weichmachern behandelt worden ist.
(30) Mehrlagiges Flächenprodukt nach einem der vorstehenden Punkte, wobei mindestens eine der Lagen aus mehreren Schichten aufgebaut ist.
(31) Verfahren zur Herstellung eines mehrlagigen Flächenprodukts mit wenigstens einer feuchtigkeitsundurchlässigen Lage beinhaltend
   (a) die Bereitstellung der überwiegend aus Tissue-Papier bestehenden Lagen, wie in den vorstehenden Punkten definiert, durch
      - das Formieren und Entwässern der Papierbahn nach dem Stoffauflauf mittels einer Siebpartie,
      - das Entwässern der Papierbahn durch mechanisches Pressen in einer Pressenpartie,
      - das Trocknen der Papierbahn in einer Trockenpartie,
   (b) die Bereitstellung der feuchtigkeitsundurchlässigen Lage, wie in den vorstehenden Punkten definiert,
   (c) und das Zusammenführen der verschiedenen Lagen mittels Prägung und/oder Verleimung.
(32) Verfahren zur Herstellung gemäß Punkt 31, wobei die Zusammenführung der verschiedenen Lagen mittels Kantenprägung und/oder Kantenverleimung erfolgt.
(33) Verwendung wenigstens einer feuchtigkeitsundurchlässigen Lage, wie in einem der vorstehenden Punkte definiert, zur Herstellung eines Papiertaschentuchs.
(34) Verwendung des mehrlagigen Flächenprodukts mit wenigstens einer feuchtigkeitsundurchlässigen Lage, wie in einem der Punkte 1 bis 30 definiert, zur Vermeidung der Kontamination mit Krankheitserregern und/oder Schadstoffen.
(35) Verwendung des mehrlagigen Flächenprodukts mit wenigstens einer feuchtigkeitsundurchlässigen Lage, wie in einem der Punkte 1 bis 30 definiert, zur Verringerung des Infektionsrisikos.
(36) Verwendung des mehrlagigen Flächenprodukts mit wenigstens einer feuchtigkeitsundurchlässigen Lage, wie in einem der Punkte 1 bis 30 definiert, als Papiertaschentuch, als Sanitärprodukt, als Wischtuch, als Handtuch, als Gesichtstuch, als Seidenpapier, als Kleidungstück, als Bettwäsche oder als Serviette, vorzugsweise als Papiertaschentuch.
(37) Verwendung des mehrlagigen Flächenprodukts gemäß Punkt 36, als Papiertaschentuch, als Toilettenpapier, als Wischtuch, als Gesichtstuch, als Haushaltstuch, als Serviette, vorzugsweise als Papiertaschentuch.

### Kurzbeschreibung der Figuren

Folgende Bezugszeichen werden in den Figuren verwendet:
1: Lage überwiegend aus Tissue-Papier bestehend
2: Feuchtigkeitsundurchlässige Lage
3: Lagenhaftung (Prägung und/oder Verleimung)
4: Zwischenlage, überwiegend aus Tissue-Papier
5: Außenlage mit hoher Saugfähigkeit und Wasseraufnahmekapazität

**Fig.1****:** Schematische Darstellung eines zweilagigen Flächenprodukts mit einer überwiegend aus Tissue-Papier bestehenden Lage und einer feuchtigkeitsundurchlässigen Lage.
**Fig.2****:** Schematische Darstellung eines dreilagigen Flächenprodukts mit wenigstens einer feuchtigkeitsundurchlässigen Lage als Zwischenlage.
**Fig.3****:** Schematische Darstellung eines vierlagigen Flächenprodukts mit zwei feuchtigkeitsundurchlässigen Lagen als Zwischenlagen.
**Fig.4****:** Schematische Darstellung eines vierlagigen Flächenprodukts mit einer feuchtigkeitsundurchlässigen Lage als Zwischenlage, und einer überwiegend aus Tissue-Papier bestehenden Zwischenlage.
**Fig.5****:** Schematische Darstellung eines mehrlagigen Flächenprodukts mit einer feuchtigkeitsundurchlässigen Zwischenlage und einer überwiegend aus Tissue-Papier bestehenden Zwischenlage, wobei es sich bei einer der Außenlagen um eine Lage mit hoher Saugfähigkeit und Wasseraufnahmekapazität handelt.

### Detaillierte Beschreibung der Erfindung

Das mehrlagige Flächenprodukt der vorliegenden Erfindung umfasst wenigstens zwei zumindest teilweise miteinander verbundene Lagen, mit wenigstens einer überwiegend aus Tissue-Papier bestehenden Lage und wenigstens einer feuchtigkeitsundurchlässigen Lage.

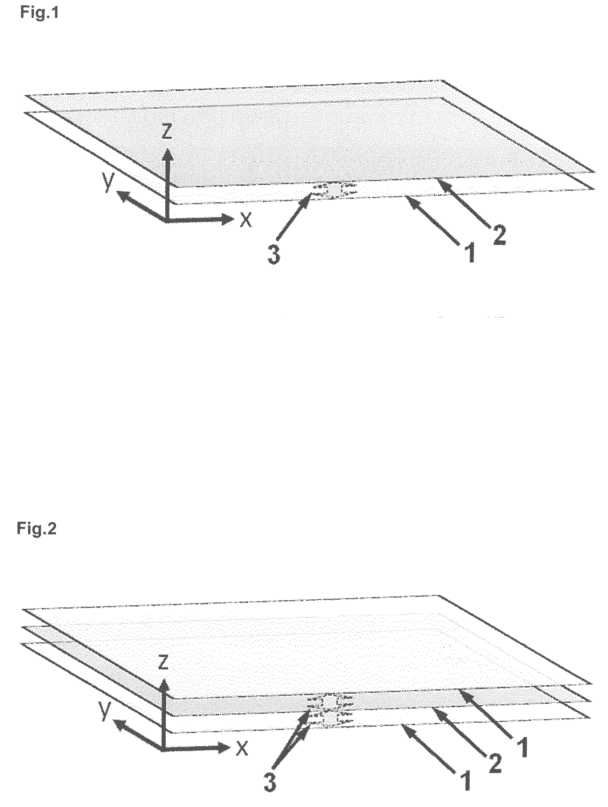

Ein mehrlagiges Flächenprodukt gemäß der vorliegenden Erfindung, ist ein aus mindestens zwei Lagen bestehendes flächiges Erzeugnis, das dadurch definiert ist, dass seine Dicke, (also die Ausdehnung des ausgebreiteten Flächenprodukts entlang der z-Achse in den Figuren 1-5), gegenüber der längsten Ausdehnung auf einer seiner Flächen (also der längsten Linie, die sich in der x-y-Ebene in den Figuren 1-5, parallel zur Oberfläche des ausgebreiteten Flächenprodukts ziehen lässt) vernachlässigbar klein ist, mit einer Lagendicke (also die Ausdehnung einer Lage entlang der z-Achse in den Figuren 1-5) von maximal 1 mm. Wegwerfwindeln, Damenbinden, Inkontinenzprodukte und Ähnliches sind im Sinne der vorliegenden Erfindung keine Flächenprodukte.

Ein mehrlagiges Flächenprodukt gemäß der vorliegenden Erfindung weist mindestens zwei Lagen, typischerweise drei bis sieben, insbesondere drei bis fünf Lagen auf.

Die einzelnen Lagen können aus mehreren Schichten aufgebaut sein. Der Ausdruck Schicht bezeichnet, innerhalb einer Lage, einen Teilbereich entlang der Achse die senkrecht durch die Lagenoberflächen zeigt (z-Achse in Fig. 1-4), der gegenüber einem benachbarten Teilbereich veränderte chemischen und/oder physikalischen Eigenschaften aufweist. Diese veränderten Eigenschaften einer Schicht können beispielsweise durch eine andere Faserzusammensetzung entstehen. Schichten können im Unterschied zu Lagen in der Regel nicht voneinander getrennt werden.

Gemäß der vorliegenden Erfindung besteht eine Lage überwiegend aus Tissue-Papier, wenn sie zu mehr als 50 Gew.-% aus Tissue-Papier besteht, d.h. Zusatzstoffe zur Veränderung der Lageneigenschaften (z.B. Tenside, Weichmacher, Bindemittel, Pigmente, kosmetischen Stoffen, Stoffe zur Erhöhung der Festigkeit, Beschichtungen, nicht-faserartige Füllstoffe, Retentionsmittel, Verleimungsmittel, optische Aufheller etc.) weniger als 50 Gew.-% der Lage ausmachen.

Die Fasern in der Faserstoffsuspension (oder einfach Stoffsuspension), welche als Grundlage zur Herstellung des Tissue-Papiers dient, können unter anderem Fasern aus pflanzlichen Zellstoffen wie Holz-Zellstoff, Baumwoll-Linters oder Bagasse und Synthesefasern wie Polyethylen- und Polypropylen-Fasern oder Rayon umfassen.

Der Begriff Tissue-Papier wird gemäß der vorliegenden Erfindung für saugfähige Papiere mit einem Flächengewicht von typischerweise 5 bis 65 g/m², insbesondere zwischen 15 bis 30 g/m², verwendet, die als einzelne Lagen in einem mehrlagigen Flächenprodukt eingesetzt werden können, z.B. in einem mehrlagigen Tissueprodukt oder gemäß der vorliegenden Erfindung als saug- und wasseraufnahmefähige Lagen in einem mehrlagigen Flächenprodukt mit verschiedenen Lagentypen. Tissue-Papiere sind in der Regel aus wässriger Dispersion hergestellte gekreppte Papiere mit einem wie oben definierten Flächengewicht.

Die Herstellung von Tissue-Papier Lagen ist an sich bekannt. Die Tissue-Papier-Erzeugung erfolgt für gewöhnlich mit Hilfe der Nasslegetechnik. Nachdem der Stoffauflauf die wässrige Stoffsuspension der papierbildenden Fasern auf ein sich bewegendes, wasserdurchlässiges Papierbildungssieb gelegt hat, wird diese Papierbahn in der Siebpartie über das Sieb entwässert sowie formiert. In der darauffolgenden Pressenpartie wird die Papierbahn mit Hilfe von Nasspressen durch mechanisches Pressen weiter entwässert und gegebenenfalls vorgetrocknet. Die Vortrocknung kann mit Hilfe eines Durchströmungstrockners, beispielsweise unter Anwendung der Durchström-Vortrocknungs-Verfahrenstechnik (TAD-Verfahren) erfolgen, wie z.B. in EP0347177A2 beschrieben. Schließlich wird die Papierbahn in der Trockenpartie auf einem Kreppzylinder (auch Yankee-Zylinder genannt) fertig getrocknet.

Tissue-Papier zeichnet sich gegenüber anderen Papiererzeugnissen außerdem durch ein sehr viel höheres spezifisches Arbeitsaufnahmevermögen aus. Das spezifische Arbeitsaufnahmevermögen wird gemäß DIN EN 12625-4 und DIN EN 12625-5 bestimmt, und im Bezug auf das Testprobenvolumen vor der Prüfung ermittelt.

Für das hohe spezifische Arbeitsaufnahmevermögen eines Tissue-Papiers ist unter anderem die Kreppung verantwortlich. Die Kreppung erfolgt entweder am Ende der Pressenpartie (Nasskreppen) oder auf dem Krepp-Zylinder (Trockenkreppen). Dabei werden durch die Geschwindigkeitsdifferenz zweier Komponenten welche die Papierbahn transportieren oder durch das Auflaufen der Papierbahn auf einen Kreppschaber kleinste Querfältchen generiert.

Gemäß der vorliegenden Erfindung kann die Kreppung der überwiegend aus Tissue-Papier bestehenden Lagen durch trockenkreppen oder nasskreppen erfolgen, vorzugsweise durch trockenkreppen.

In einer bevorzugten Ausführungsform der Erfindung umfasst das mehrlagige Flächenprodukt wenigstens drei zumindest teilweise miteinander verbundene Lagen, mit zwei überwiegend aus Tissue-Papier bestehenden Außenlagen und wenigstens einer feuchtigkeitsundurchlässigen Lage als Zwischenlage

In einer weiteren bevorzugten Ausführungsform der Erfindung umfasst das mehrlagige Flächenprodukt wenigstens vier zumindest teilweise miteinander verbundene Lagen, mit zwei überwiegend aus Tissue-Papier bestehende Außenlagen, wenigstens einer feuchtigkeitsundurchlässigen Zwischenlage sowie wenigstens einer überwiegend aus Tissue-Papier bestehende Zwischenlage.

In einer Ausführungsform der Erfindung bestehen die einzelnen Außen- und Zwischenlagen des mehrlagigen Flächenprodukts aus einem biologisch abbaubaren Material. Ein Material ist im Sinne der vorliegenden Erfindung dann biologisch abbaubar, wenn es gemäß *DIN EN* 13432 durch Kompostierung innerhalb eines klar definierten Zeitraums zu mindestens 90 % abgebaut wird.

Das mehrlagige Flächenprodukt mit wenigstens einer feuchtigkeitsundurchlässigen Lage, in einer Ausführungsform der Erfindung, ist ein Papiertaschentuch, ein Sanitärprodukt (z.B. Toilettenpapier), ein Wischtuch, ein Gesichtstuch (z.B. ein Abschminktuch, ein Kosmetiktuch etc.), ein Haushaltstuch (z.B. ein Küchentuch), ein Handtuch, Bettwäsche, ein Kleidungstück (z.B. Krankenhaus- oder Küchen-Wegwerfkleidung), Seidenpapier (z.B. Verpackpapier) oder eine Serviette. In seiner bevorzugten Ausführungsform ist das mehrlagige Flächenprodukt mit wenigstens einer feuchtigkeitsundurchlässigen Lage ein Papiertaschentuch, ein Toilettenpapier, ein Wischtuch, ein Gesichtstuch, ein Haushaltstuch oder eine Serviette. In einer noch bevorzugteren Ausführungsform der Erfindung ist das mehrlagige Flächenprodukt ein Papiertaschentuch.

Die feuchtigkeitsundurchlässige Lage gemäß der vorliegenden Erfindung ist nicht speziell limitiert. In einer Ausführungsform der Erfindung ist die feuchtigkeitsundurchlässige Lage eine biologisch abbaubare Folie, die ein oder mehrere biologisch abbaubare Polymere enthält. Die biologisch abbaubaren Polymere umfassen, ohne darauf beschränkt zu sein, Polylactid sowie dessen Copolymere, Chitosan, Casein, Polyhydroxyessigsäure, Polyesteramide Polyhydroxyalkanoate, Poly-3-hydroxyvalerat, Poly-3-hydroxybutyrat-co-3-hydroxyvalerat Copolymere, Poly-3-hydroxybutyrat-co-3-hydroxyhexanoat, Poly-3-hydroxybutyrat-co-3-hydroxyoctanoat, Poly-3-hydroxybutyrat-co-4-hydroybutyrat, Poly-3-hydroxybutyrat-co-3-hydroxydecanoat, Poly-3-hydroxybutyrat-co-3-hydroxyoctadecanoat, Polyhydroxybutyrat, Polyvinylbutyral, Polyalkylencarbonate, Polycaprolacton, Polybutylensuccinat, Polybutylensuccinat-Adipat, Polyethylensuccinat, modifiziertes Polyethylenterephthalat, aliphatisch-aromatischer Polyester Copolymere, Biokunststoffe auf der Grundlage von Lignin und Cellulose, oder Kombinationen davon.

In einer speziellen Ausführungsform werden die biologisch abbaubaren Polymere aus der Gruppe umfassend aus Polylactid sowie dessen Copolymeren, Chitosan, Casein, Polyhydroxyessigsäure, Polyesteramiden, Polyhydroxyalkanoaten, Poly-3-hydroxyvalerat, Poly-3-hydroxybutyrat-co-3-hydroxyvalerat Copolymeren, Poly-3-hydroxybutyrat-co-3-hydroxyhexanoat, Poly-3-hydroxybutyrat-co-3-hydroxyoctanoat, Poly-3-hydroxybutyrat-co-4-hydroybutyrat, Poly-3-hydroxybutyrat-co-3-hydroxydecanoat, Poly-3-hydroxybutyrat-co-3-hydroxyoctadecanoat, Polyhydroxybutyrat, Polyvinylbutyral, Polyalkylencarbonaten, Polycaprolacton, Polybutylensuccinat, Polybutylensuccinat-Adipat, Polyethylensuccinat, modifiziertem Polyethylenterephthalat, aliphatisch-aromatischen Polyester Copolymeren, Biokunststoffen auf der Grundlage von Lignin und Cellulose, und Kombinationen davon ausgewählt.

Verfahren zur Herstellung von biologisch abbaubaren Folien aus biologisch abbaubaren Polymeren sind bekannt. Eine solche biologisch abbaubare Folie kann unter anderem durch Spritzguss, Extrusion, Kalandrieren, Pressen, Tiefziehen oder Blasformen hergestellt werden. Solche Herstellungsverfahren werden beispielsweise in US5952433A, DE4127763A1, DE19856507A1, DE19906295A1, FR2825708A1, WO2007135037A1 und US5200247A beschrieben. Das Verfahren zur Herstellung der biologisch abbaubare Folie die ein oder mehrere biologisch abbaubare Polymere enthält ist nicht speziell beschränkt. In einer alternativen Ausführungsform der Erfindung wird die biologisch abbaubare Folie durch Spritzguss, Extrusion, Kalandrieren, Pressen, Tiefziehen oder Blasformen, vorzugsweise durch Extrusion, hergestellt.

In einer speziellen Ausführungsform der Erfindung besteht die feuchtigkeitsundurchlässige Lage überwiegend aus Zellstoff, welche durch die Zugabe von, oder die Beschichtung mit, einem oder mehreren biologisch abbaubaren Polymeren feuchtigkeitsundurchlässig gemacht wurde. Gemäß der vorliegenden Erfindung besteht eine Lage dann überwiegend aus Zellstoff, wenn mehr als 50 Gew.-% des Massenanteils der Lage aus pflanzlichem Zellstoff bestehen.

Das Verfahren zur Herstellung von biologisch abbaubaren Polymeren enthaltenden Lagen, wie beispielsweise papierähnlichen Lagen, ist nicht speziell limitiert. Ein Herstellungsverfahren findet sich beispielsweise in WO2012168398A1. Das Verfahren zur Beschichtung der feuchtigkeitsundurchlässigen Lage mit biologisch abbaubaren Polymeren ist auch nicht speziell limitiert. Entsprechende Verfahren werden beispielsweise in WO2010/034712A1 und WO03/022540A1 offenbart. In einer besonderen Ausführungsform der Erfindung wird die feuchtigkeitsundurchlässige Lage durch Laminieren, Extrusion oder Spritzguss beschichtet.

In einer alternativen Ausführungsform der Erfindung besteht die feuchtigkeitsundurchlässige Folie, das zugegebene Material oder die Beschichtung vorzugsweise aus Polylactid, aliphatisch-aromatischen Polyester Copolymeren oder einer Kombination davon.

In einer weiteren alternativen Ausführungsform wird bei der Herstellung der feuchtigkeitsundurchlässigen Folie, des zugegebene Materials oder der Beschichtung eine Gleitmittelsubstanz oder ein Antiblockmittel hinzugegeben.

Die Lagendicke der feuchtigkeitsundurchlässigen Lage ist gemäß der Erfindung nicht speziell begrenzt. In einer Ausführungsform beträgt die Lagendicke 10 bis 150 µm, vorzugsweise 20 bis 80 µm.

In einer bevorzugten Ausführungsform der Erfindung bestehen die Außenlagen des mehrlagigen Flächenprodukts überwiegend aus Zellstoff. In einer alternativen bevorzugten Ausführungsform bestehen die überwiegend aus Tissue-Papier bestehenden Zwischenlagen überwiegend aus Zellstoff. In einer weiteren alternativen bevorzugten Ausführungsform bestehen die überwiegend aus Tissue-Papier bestehenden Lagen überwiegend aus Zellstoff.

In einer weiteren bevorzugten Ausführungsform sind die überwiegend aus Tissue-Papier bestehenden Lagen dadurch gekennzeichnet, dass sie überwiegend aus Zellstoff bestehen, wobei sie 51 bis 100 Gew.-% Zellstofffasern und 0 bis 49 Gew-% Synthesefasern und/oder chemisch modifizierte Fasern enthalten. Die chemisch zu modifizierenden Fasern können dabei natürlichen oder synthetischen Ursprungs sein.

Wie oben beschrieben zeichnet sich ein Tissue-Papier durch ein vergleichsweise niedriges Flächengewicht aus. Gemäß der Erfindung haben die überwiegend aus Tissue-Papier bestehenden Lagen ein Flächengewicht von 5 bis 65 g/m2, vorzugsweise von 15 bis 30 g/m², insbesondere von 15 bis 25 g/m².

Entsprechend einer Ausführungsform der vorliegenden Erfindung handelt es sich bei mindestens einer der überwiegend aus Tissue-Papier bestehenden Lagen um eine Lage mit hoher Saugfähigkeit und Wasseraufnahmekapazität. In einer speziellen Ausführungsform enthält das mehrlagige Flächenprodukt wenigstens eine Außenlage mit hoher Saugfähigkeit und Wasseraufnahmekapazität. In einer weiteren speziellen Ausführungsform enthält das mehrlagige Flächenprodukt zusätzlich wenigstens eine überwiegend aus Tissue-Papier bestehende Zwischenlage mit hoher Saugfähigkeit und Wasseraufnahmekapazität.

Die Saugfähigkeit und das Wasseraufnahmevermögen von Tissue-Papier werden wesentlich durch dessen Porosität und spezifisches Volumen bestimmt. Die Porosität wird unter anderem durch den Mahlgrad °SR der Fasern der Stoffsuspension aus der das Tissue-Papier hergestellt wird, beeinflusst. Der Mahlgrad °SR (oder °SR Wert für Schopper Riegler Wert) ist ein Maß des Entwässerungsverhaltens für im Wasser suspendierte Fasern und wird gemäß Zellcheming Merkblatt V/761 bestimmt. Je höher der Mahlgrad °SR desto höher ist der Feinstoffgehalt der Stoffsuspension und desto geringer die Porosität. Ein hoher Mahlgrad führt aber auch zu einer hohen Reißfestigkeit.

In einer Ausführung der Erfindung ist der Mahlgrad der Fasern in der Stoffsuspension, welche für die Herstellung der Lagen, die überwiegend aus Tissue-Papier bestehen, verwendet wird, zwischen 14 und 22 °SR, bevorzugt zwischen 15 und 19 °SR.

Das spezifische Volumen des Tissue-Papiers kann, wie beispielsweise in WO03/062528 offenbart, durch zonales Pressen beim Entwässerungsschritt im Herstellungsprozess erhöht werden. Dabei wird die Papierbahn beim Entwässerungsschritt zwischen der oberen und unteren Bespannung durch Gasdruck, mechanischen Druck oder eine Kombination davon entwässert. In einer alternativen Ausführung sind, um das spezifische Volumen des Tissue-Papiers zu erhöhen, die obere und untere Bespannung im Entwässerungsschritt über 10 bis 60 %, vorzugsweise über 15 bis 50 %, der überlappenden Fläche in direktem Kontakt.

Lagenprägungsverfahren sind im Stand der Technik bekannt. Nach einer alternativen Ausführungsform der Erfindung weist wenigstens eine Außenlage des mehrlagigen Flächenprodukts eine zumindest auf einem Teil ihrer Oberfläche aufgebrachte (Lagen-) Prägung auf. Das Verfahren zur Lagenprägung ist gemäß der Erfindung nicht speziell limitiert.

Die verschiedenen Lagen des Flächenprodukts müssen mit genügender Lagenhaftung miteinander verbunden werden. Die Methode die zum Verbinden der einzelnen Lagen verwendet wird ist nicht speziell limitiert. Die Lagen können durch mechanische Prägedruckverfahren miteinander verbunden werden, wie beispielsweise in GB363699A oder in DE19758069C1 beschrieben. Die einzelnen Lagen können aber auch durch Verleimung miteinander verbunden werden. Entsprechende Verfahren werden beispielsweise in US3673060, US5173351 und DE10022464A1 offenbart. Als Verleimungsmittel können alle üblichen Klebstoffe unverdünnt oder verdünnt eingesetzt werden, wie beispielsweise Stärkeleim, Celluloseether, Polyvinylacetat, Vinylamin-Polymere oder Polyvinylalkohol.

In einer speziellen Ausführungsform der Erfindung werden die überwiegend aus Tissue-Papier bestehenden Lagen mit Mitteln behandelt die die Eigenschaften des Tissue-Papiers verändern. Es können beispielsweise Mittel zur Erhöhung der Absorptionsgeschwindigkeit, Mittel zur Verbesserung der Oberflächenweichheit, Mittel zur Erhöhung der Festigkeit (insbesondere der Nassfestigkeit) oder kosmetische Stoffe verwendet werden. Eine Erhöhung Absorptionsgeschwindigkeit kann durch die Behandlung mit Tensiden erreicht werden.

Zur Verbesserung der Weichheit kann durch die Behandlung mit einzelnen oder mit Kombinationen von mehreren Weichmachern erreicht werden. Als Weichmacher können beispielsweise Polyhydroxyverbindungen (z.B. Ethylenglykol, Propylenglykol, flüssige Polyethylenglykolderivate, flüssige Polypropylenglykolderivate oder Glyzerin) oder quaternäre Ammoniumverbindungen wie unter anderem in US5312522 oder US5397435 beschrieben, sowie Polysiloxane wie z.B. in EP0347153A2 und EP0347154A2 beschrieben, verwendet werden.

Die Festigkeit und speziell die Nassfestigkeit kann beispielsweise durch die Behandlung mit Epichlorhydrinharzen oder vernetzten Polyalkylenaminen verbessert werden, wie in DE19963835A1 beschrieben. Unter kosmetischen Stoffen sind Duftstoffe, Hautpflegemittel und medizinische Wirkstoffe zu verstehen.

Die Behandlung mit den oben beschriebenen Eigenschaften-verändernden Mitteln kann in allen Stadien der Lagenherstellung erfolgen; also im Nassteil nach dem Stoffauflauf, nach der Siebpartie, in der Pressenpartie oder in der Trockenpartie. Die Behandlung kann durch Walzen-, Sprühauftragungs- oder Imprägnierverfahren erfolgen, wie beispielsweise in WO94/05857, EP0347177A2 und DE19963835A1 und dem darin erwähnten Stand der Technik beschrieben.

Das Verfahren zur Herstellung des mehrlagigen Flächenprodukts mit wenigstens einer feuchtigkeitsundurchlässigen Lage gemäß der vorliegenden Erfindung beinhaltet die Bereitstellung wenigstens einer überwiegend aus Tissue-Papier bestehenden Lage, die Bereitstellung wenigstens einer feuchtigkeitsundurchlässigen Lage, sowie das Zusammenführen der verschiedenen Lagen mittels Prägung oder Verleimung, vorzugsweise mittels Kantenprägung und/oder Kantenverleimung. Die Herstellung erfolgt wie oben beschrieben. Die Zusammenführung der einzelnen Lagen zu einem mehrlagigen Flächenprodukt kann vor dem Abschluss der Trocknung als Teil der Lagenherstellung, oder nach Abschluss der Trocknung in einem separaten und unabhängigen Schritt erfolgen.

### Beispiel 1

Ein zweilagiges Flächenprodukt (siehe Fig.1) mit einer biologisch abbaubaren, 70 µm dicken, aus einem Gemisch von Polylactid, einem aliphatisch-aromatischen Polyester Copolymer und einem Polyhydroxyalkanoat bestehenden Folie als feuchtigkeitsundurchlässige Lage. Die Außenlage besteht aus Tissue-Papier. Das Zusammenbringen der Lagen erfolgt in der letzten Stufe der Lagenproduktion durch Verleimung.

### Beispiel 2

Ein dreilagiges Flächenprodukt (siehe Fig.2) mit einer biologisch abbaubaren, 50 µm dicken, aus einem Gemisch von Polylactid und einem aliphatisch-aromatischen Polyester Copolymer bestehenden Folie als feuchtigkeitsundurchlässige Zwischenlage. Die Außenlagen bestehen aus Tissue-Papier, wobei der Zellstoffanteil überwiegt. Das Zusammenbringen der Lagen erfolgt in der letzten Stufe der Lagenproduktion durch Verleimung und Prägedruck.

### Beispiel 3

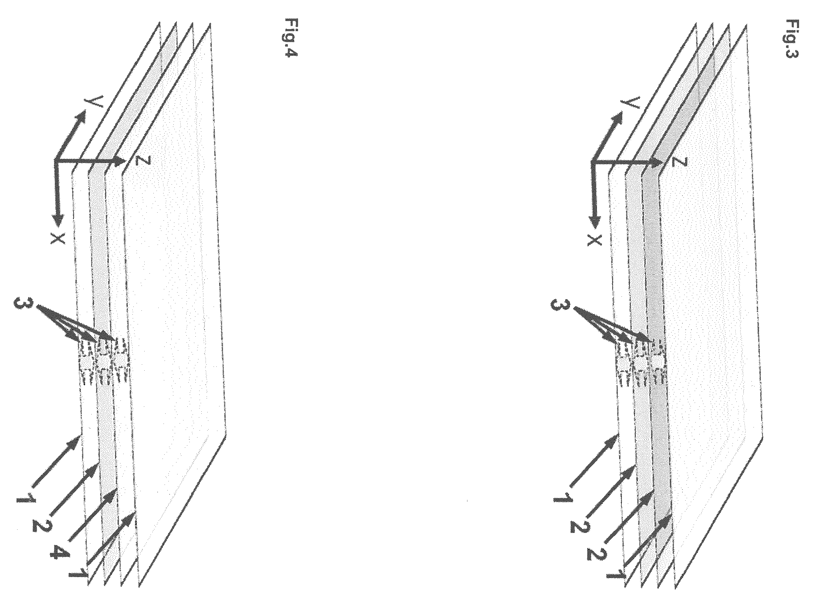

Ein vierlagiges Papiertaschentuch (siehe Fig.4) mit einer biologisch abbaubaren, 50 µm dicken, aus einem Gemisch von Polylactid und einem aliphatisch-aromatischen Polyester Copolymer bestehenden Folie als feuchtigkeitsundurchlässige Zwischenlage. Die beiden Außenlagen, sowie eine weitere überwiegend aus Tissue-Papier bestehende Zwischenlage weisen einen Zellstofffaseranteil von ≥ 50 Gew.-% auf. Das Zusammenbringen der Lagen erfolgt durch Prägedruck entlang des Randes des Produkts mit einem erhitzten Prägestempel. Die Tissue-Papier Lagen sind mit einem Weichmacher und einem Tensid behandelt worden. Die Außenseiten des fertigen Produkts weisen eine Randprägung auf.

### Beispiel 4

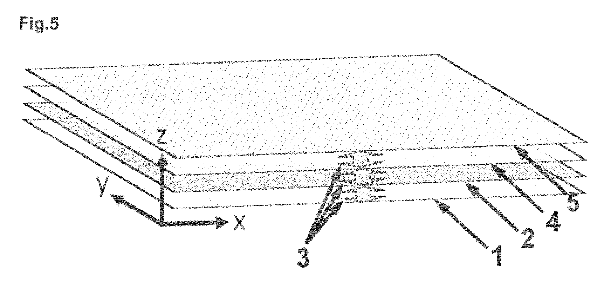

Ein vierlagiges Papiertaschentuch (siehe Fig.5) mit einer biologisch abbaubaren, 40 µm dicken, Polycaprolacton enthaltenden Folie als feuchtigkeitsundurchlässige Zwischenlage. Die beiden Außenlagen, sowie eine weitere überwiegend aus Tissue-Papier bestehende Zwischenlage, weisen einen Zellstofffaseranteil von ≥ 50 Gew.-% auf. Bei jener Außenlage, die auf der Zwischenlage aus Tissue-Papier liegt, handelt es sich um eine Lage mit hoher Saugfähigkeit und Wasseraufnahmekapazität. Das Zusammenbringen der Lagen erfolgt mit den fertigen Lagen durch Verleimung. Die Tissue-Papier Lagen sind mit einem Weichmacher, einem Tensid und einem Duftstoff behandelt worden. Die Außenseiten des fertigen Produkts weisen ein Randprägemuster auf.

## Patentansprüche

1. Mehrlagiges Flächenprodukt umfassend wenigstens zwei zumindest teilweise verbundene Lagen, mit wenigstens einer überwiegend aus Tissue-Papier bestehenden Lage und wenigstens einer feuchtigkeitsundurchlässigen Lage.

2. Mehrlagiges Flächenprodukt gemäß Anspruch 1 umfassend wenigstens drei zumindest teilweise verbundene Lagen, mit zwei überwiegend aus Tissue-Papier bestehenden Lagen als Außenlagen und wenigstens einer feuchtigkeitsundurchlässigen Lage als Zwischenlage.

3. Mehrlagiges Flächenprodukt nach Anspruch 1 oder 2, **dadurch gekennzeichnet, dass** die einzelnen Lagen aus einem biologisch abbaubaren Material bestehen.

4. Mehrlagiges Flächenprodukt nach einem der vorstehenden Ansprüche, bei dem es sich um ein Papiertaschentuch, ein Toilettenpapier, ein Wischtuch, ein Gesichtstuch, ein Haushaltstuch oder eine Serviette handelt.

5. Mehrlagiges Flächenprodukt nach Anspruch 4 bei dem es sich um ein Papiertaschentuch handelt.

6. Mehrlagiges Flächenprodukt nach den Ansprüchen 1 bis 5, **dadurch gekennzeichnet, dass** die feuchtigkeitsundurchlässige Lage eine biologisch abbaubare Folie ist, die ein oder mehrere biologisch abbaubare Polymere enthält, ausgewählt aus der Gruppe bestehend aus Polylactid sowie dessen Copolymeren, Chitosan, Casein, Polyhydroxyessigsäure, Polyesteramiden, Polyhydroxyalkanoaten, Poly-3-hydroxyvalerat, Poly-3-hydroxybutyrat-co-3-hydroxyvalerat Copolymeren, Poly-3-hydroxybutyrat-co-3-hydroxyhexanoat, Poly-3-hydroxybutyrat-co-3-hydroxyoctanoat, Poly-3-hydroxybutyrat-co-4-hydroybutyrat, Poly-3-hydroxybutyrat-co-3-hydroxydecanoat, Poly-3-hydroxybutyrat-co-3-hydroxyoctadecanoat, Polyhydroxybutyrat, Polyvinylbutyral, Polyalkylencarbonaten, Polycaprolacton, Polybutylensuccinat, Polybutylensuccinat-Adipat, Polyethylensuccinat, modifiziertem Polyethylenterephthalat, aliphatisch-aromatischen Polyester Copolymeren, Biokunststoffen auf der Grundlage von Lignin und Cellulose, und Kombinationen davon.

7. Mehrlagiges Flächenprodukt nach Anspruch 6, **dadurch gekennzeichnet, dass** die biologisch abbaubare Folie durch Spritzguss, Extrusion, Kalandrieren, Pressen, Tiefziehen oder Blasformen hergestellt wurde.

8. Mehrlagiges Flächenprodukt nach einem der Ansprüche 1 bis 5, **dadurch gekennzeichnet, dass** die feuchtigkeitsundurchlässige Lage überwiegend aus Zellstoff besteht, welcher durch Zugabe von, oder Beschichtung mit, einem oder mehreren biologisch abbaubaren Polymeren feuchtigkeitsundurchlässig gemacht wurde.

9. Mehrlagiges Flächenprodukt nach einem der vorstehenden Ansprüche, bei dem die überwiegend aus Tissue-Papier bestehenden Lagen überwiegend aus Zellstoff bestehen, wobei die überwiegend aus Tissue-Papier bestehenden Lagen vorzugsweise 51 bis 100 Gew.-% Zellstofffasern und 0 bis 49 Gew-% Synthesefasern und/oder chemisch modifizierte Fasern enthalten.

10. Mehrlagiges Flächenprodukt nach einem der vorstehenden Ansprüche, **dadurch gekennzeichnet, dass** das Tissue-Papier gekrepptes Papier mit einem Flächengewicht von 5 bis 65 g/m², vorzugsweise 15 bis 30 g/m² ist.

11. Mehrlagiges Flächenprodukt nach einem der vorstehenden Ansprüche, **dadurch gekennzeichnet, dass** das Flächengewicht der überwiegend aus Tissue-Papier bestehenden Lage(n) 5 bis 65 g/m², vorzugsweise 15 bis 30 g/m², beträgt.

12. Mehrlagiges Flächenprodukt nach einem der vorstehenden Ansprüche, **dadurch gekennzeichnet, dass** wenigstens eine der überwiegend aus Tissue-Papier bestehenden Lagen eine hohe Saugfähigkeit und Wasseraufnahmekapazität aufweist.

13. Mehrlagiges Flächenprodukt nach einem der vorstehenden Ansprüche, bei dem die Lagen durch Prägung und/oder Verleimung, vorzugsweise durch Kantenprägung und/oder Kantenverleimung, zusammengebracht sind.

14. Verfahren zur Herstellung eines mehrlagigen Flächenprodukts, in dem wenigstens eine feuchtigkeitsundurchlässige Lage, wie in einem der vorstehenden Ansprüche definiert, mit wenigstens einer überwiegend aus Tissue-Papier bestehenden Lage, wie in einem der vorstehenden Ansprüche definiert, zusammengebracht wird.

15. Verwendung wenigstens einer feuchtigkeitsundurchlässigen Lage, wie in einem der vorstehenden Ansprüche definiert, zur Herstellung eines Papiertaschentuchs.
